# NEUE EUROPÄISCHE PATENTSCHRIFT

(11) **EP 1 777 452 B2**
(45) Veröffentlichungstag und Bekanntmachung des Hinweises auf die Entscheidung über den Einspruch: **03.05.2023**
(45) Hinweis auf die Patenterteilung: 25.08.2010
(21) Anmeldenummer: 06022243.7
(22) Anmeldetag: 24.10.2006
(51) Int. Cl.: F16L 53/00, H05B 3/58, B60S 1/48

(54) **Beheizbarer Steckverbinder**
Heatable connector
Connecteur chauffable

(30) Priorität: 24.10.2005 DE 102005050867
(43) Veröffentlichungstag der Anmeldung: 25.04.2007
(73) Patentinhaber: DBK David + Baader GmbH, Nordring 26 76761 Rülzheim (DE)
(72) Erfinder: Gschwind, Thomas, 67098 Bad Dürkheim (DE)
(74) Vertreter: Winter, Brandl - Partnerschaft mbB

(56) Entgegenhaltungen:
- EP-A- 0 284 669
- EP-A- 1 557 601
- EP-A1- 0 502 322
- EP-A1- 0 616 166
- EP-A1- 1 375 997
- EP-A1- 1 513 227
- EP-A2- 0 068 688
- EP-A2- 1 070 642
- EP-A2- 1 610 049
- EP-B1- 0 353 643
- WO-A1-2005/124219
- WO-A1-2007/032034
- DE-A1- 3 324 268
- DE-A1- 10 023 649
- DE-A1- 10 055 423
- DE-A1- 10 212 413
- DE-A1- 19 846 282
- DE-A1- 19 855 288
- DE-A1- 19 901 029
- DE-A1- 19 902 432
- DE-C1- 4 135 082
- DE-U1- 20 107 321
- US-A- 4 447 707
- US-A- 5 791 377
- US-A1- 2002 040 895
- US-B2- 6 688 650

## Beschreibung

Die vorliegende Erfindung betrifft einen Steckverbinder zum Verbinden einer ersten Fluidleitung mit einer zweiten Fluidleitung im Zusammenwirken mit mindestens einem Gegensteckverbinder, wobei ein Medium zwischen der ersten Fluidleitung und der zweiten Fluidleitung durch den Steckverbinder strömt.

Solche Steckverbinder werden beispielsweise in Kraftfahrzeuge eingebaut, insbesondere in die Förderkette von wässrigen Harnstofflösungen, Kraftstoffen, Blowbygas, oder Reinigungsflüssigkeiten für die Scheiben- oder Scheinwerferreinigung. In einer derartigen Förderkette kann bei niedrigen Temperaturen die in der Förderkette enthaltene Flüssigkeit bzw. die im Gas enthaltene Feuchtigkeit einfrieren und es können Eisansätze vorkommen. Deshalb werden bei bekannten Anordnungen die diese Fluide fördernden Elemente der Förderkette, wie Pumpen oder Schläuche beheizt, um das Einfrieren derselben zu verhindern.

Allerdings tritt ein Problem auf, wenn Elemente der Förderkette, z.B. beheizbare Schläuche durch einen Steckverbinder gemäß des Standes der Technik miteinander verbunden werden. Da die Flüssigkeit ausschließlich in den beheizbaren Schläuchen erwärmt wird und nicht in dem Steckverbinder, in welchem keinerlei Beheizung der darin strömenden Flüssigkeit vorgesehen ist, können bei niedrigen Temperaturen Eisansätze in dem Steckverbinder vorkommen.

Die anhängige europäische Patentanmeldung EP 1 557 601 A1 der Anmelderin beschreibt einen Heizclip für eine Fluidleitung, der ein in einem Gehäuse angeordnetes Heizelement umfasst und der an der Fluidleitung anclipbar ausgestaltet ist. Ein solcher Heizclip kann von Außen an die Fluidleitung angeclipst werden und kann an einer beliebigen Stelle entlang der Fluidleitung angeordnet werden. Allerdings ist ein solcher Heizclip nicht angepasst, ein zu erwärmendes Medium an der Schnittstelle zwischen zwei Fluidleitungen zu erwärmen.

Aus der EP 0 284 669 A1 ist ebenfalls die Verbindung von beheizten Schläuchen beispielsweise mit unbeheizten Muffen bekannt. Weiterhin wird in diesem Dokument die Verbindung von beheizten Schläuchen über ein unbeheiztes Verbindungsstück beschrieben, wobei die Heizleiter der beheizten Schläuche teilweise zum Beheizen des Verbindungsstück verwendet werden. Dazu werden die an dem Verbindungsstück anliegenden Enden der Heizleiter verbunden und mit einem gemeinsamen Anschlusselement nach außen geführt. Verbindungselement, Heizleiter und Schlauchende sind mit einer Umhüllung aus Isoliermaterial umspritzt und bilden ein unlösbares Blockelement.

Die EP 1 375 997 A1 zeigt einen Steckverbinder zum Verbinden einer ersten Fluidleitung mit einer zweiten Fluidleitung. Ein zu erwärmendes Medium strömt zwischen der ersten Fluidleitung und der zweiten Fluidleitung durch den aus Metall bestehenden Steckverbinder. Der Steckverbinder weist ein Heizelement zum Beheizen des zu erwärmenden Mediums auf, das in einer seitlichen Ausnehmung des rohrförmigen Steckverbinders angeordnet ist. Zur Montage und zum elektrischen Anschluss des Heizelements ist eine Haltevorrichtung aus Kunststoff vorgesehen.

Der Erfindung liegt daher die Aufgabe zugrunde, einen Steckverbinder der genannten Art dahingehend zu verbessern, dass ein Einfrieren eines durch den Steckverbinder strömenden Fluids auch im Steckverbinder verhindert werden kann.

Gemäß der vorliegenden Erfindung wird diese Aufgabe durch einen Steckverbinder mit den Merkmalen des Patentanspruchs 1 gelöst.

Vorteilhafte Weiterbildungen der vorliegenden Erfindung sind Gegenstand mehrerer Unteransprüche.

Dadurch, dass der Steckverbinder mindestens ein Heizelement zum Beheizen des zu erwärmenden Mediums umfasst, wird die durch den Steckverbinder strömende Flüssigkeit erwärmt und mögliche Eisansätze können verhindert werden.

Das Heizelement ist in einem Gehäuseteil des Steckverbinders eingeschlossen, der von dem zu erwärmenden Medium abgedichtet ist. Dadurch kann garantiert werden, dass das zu erwärmende Medium und der Heizbereich, in dem das Heizelement sich befindet, von einander fluidisch und elektrisch getrennt sind. Dies ermöglicht eine gute elektrische Isolation zwischen dem Heizbereich und dem durch den Steckverbinder strömenden zu erwärmenden Medium. Daneben wird durch die Trennung der Funktionsbereiche "Durchströmen" und "Heizen" eine sichere Abdichtung gegen durchtretendes Fluid erreicht.

Gemäß einer bevorzugten Ausführungsform der vorliegenden Erfindung umfasst der Gehäuseteil einen im Gehäuse ausgestalteten Schacht, und das mindestens eine Heizelement ist in dem Schacht eingeschoben.

Wenn der Steckverbinder einen Durchflusskanal umfasst, durch den das zu erwärmende Medium strömt, wobei das mindestens eine Heizelement von dem Durchflusskanal abgedichtet ist, kann gewährleistet werden, dass der Heizbereich, in dem sich das mindestens eine Heizelement befindet, und das zu erwärmende Medium voneinander hermetisch isoliert sind.

Wenn die erste Fluidleitung einen ersten Schlauch umfasst, der mit einem ersten Gegensteckverbinder versehen ist, und der Steckverbinder mit dem ersten Gegensteckverbinder verbindbar ist, kann auf einfache Weise eine Schnellverbindung zwischen der ersten Fluidleitung und dem Steckverbinder hergestellt werden.

Wenn die erste Fluidleitung zwei Schläuche umfasst, die jeweils mit einem ersten Gegensteckverbinder versehen sind, und der Steckverbinder mit jedem ersten Gegensteckverbinder verbindbar ist, wird die erste Fluidleitung durch zwei Schnellverbindungen mit dem Steckverbinder verbunden und somit eine T-Verzweigung gebildet.

Wenn der Steckverbinder ein Fluidanschlusselement zum Verbinden der zweiten Fluidleitung mit dem Steckverbinder umfasst, wobei die zweite Fluidleitung einen zweiten Schlauch umfasst, und das Fluidanschlusselement rohrförmig ausgebildet ist, sodass der zweite Schlauch auf das Fluidanschlusselement aufsetzbar ist, kann auf einfache Weise die zweite Fluidleitung an den Steckverbinder angeschlossen werden. Vorzugsweise ist das Fluidanschlusselement mit Vorsprüngen zum Festhalten des aufgesetzten zweiten Schlauchs versehen, um einen sicheren Kontakt zwischen dem Steckverbinder und der zweiten Fluidleitung zu gewährleisten.

Alternativ umfasst die zweite Fluidleitung einen zweiten Schlauch, der mit einem zweiten Gegensteckverbinder versehen ist, und der Steckverbinder ist mit dem zweiten Gegensteckverbinder verbindbar. Somit können die erste und zweite Fluidleitung durch Schnellverbindungen an den Steckverbinder angeschlossen werden.

Wenn die erste Fluidleitung zwei Schläuche umfasst, die durch zwei Schnellverbindungen mit dem Steckverbinder verbunden sind und die zweite Fluidleitung auch durch eine Schnellverbindung an den Steckverbinder angeschlossen ist, wird eine T-Verzweigung gebildet, wobei drei Fluidleitungen mit maximal drei Schnellkupplungen mit dem Steckverbinder verbunden sind.

Versieht man den Steckverbinder mit einer Heizlanze, die aus einem wärmeleitenden Material, vorzugsweise Kupfer, Aluminium oder Edelstahl, besteht und mit dem mindestens einen Heizelement wärmeleitend verbunden ist, kann die von dem mindestens einen Heizelement erzeugte Wärme auf die wärmeleitende Heizlanze übertragen werden, um ein Erwärmen des strömenden Mediums in einem von dem mindestens einen Heizelement entfernten Bereich des Steckverbinders zu ermöglichen. Die Heizlanze erhöht die Wärmeaustauschfläche zwischen dem zu erwärmenden Medium und dem Heizelement, sodass die von dem Heizelement erzeugte Wärme besser verteilt werden kann.

Insbesondere, wenn die Heizlanze lang gestreckt ausgebildet ist und aus dem Steckverbinder herausragt, sodass die Heizlanze in einem zusammengesteckten Zustand in den Gegensteckverbinder einführbar ist, kann eine Vereisung des Gegensteckverbinders vermieden werden. Die von dem Heizelement erzeugte Wärme kann mittels der wärmeleitenden Heizlanze in den Bereich des Gegensteckverbinders übertragen und ein Eisansatz verhindert werden.

Stellt man die Heizlanze aus einem chemikalienbeständigen Material, vorzugsweise Edelstahl, her, so ist die Heizlanze gegen z.B. wässrige Hamstofflösungen beständig, die durch den Steckverbinder strömen. Somit wird die Lebensdauer der Heizlanze erhöht.

Besonders vorteilhaft ist es auch, wenn der Kanal des ersten Gegensteckverbinders eine wärmeleitfähige Schicht an seiner Innenseite aufweist, die vorzugsweise aus einem Metallrohr besteht, das in den Kanal des ersten Gegensteckverbinders eingepresst oder eingespritzt ist. Dadurch kann die von dem Heizelement erzeugte Wärme besser an den ersten Gegensteckverbinder abgegeben und eine noch effizientere Wärmeübertragung von dem Heizelement auf den ersten Gegensteckverbinder erreicht werden.

Wenn der Steckverbinder zwei Kontaktelemente umfasst, die mit dem mindestens einen Heizelement elektrisch verbunden sind, wobei die zwei Kontaktelemente mit einer elektrischen Leistungsversorgung verbindbar sind, kann das mindestens eine Heizelement über die zwei Kontaktelemente elektrisch versorgt werden. Das mindestens eine Heizelement wandelt diese elektrische Energie in Wärme um, die an das Medium übertragen wird.

Wenn das mindestens eine Heizelement zwischen den zwei Kontaktelementen angeordnet ist, kann ein guter Kontakt zwischen den Kontaktelementen und dem mindestens einen Heizelement garantiert und somit die elektrische Energie effizient an das Heizelement übertragen werden.

Vorzugsweise umfasst der Steckverbinder ein Steckergehäuse, wobei die zwei Kontaktelemente je eine Steckzunge aufweisen, und die zwei Steckzungen in dem Steckergehäuse angeordnet sind. Somit bilden die Steckzungen der Kontaktelemente die Kontaktelemente eines elektrischen Steckers, und die elektrische Energie kann auf einfache Weise an die Kontaktelemente übertragen werden.

Vorzugsweise umfasst das mindestens eine Heizelement ein Heizelement mit positivem Temperaturkoeffizienten, ein sogenanntes PTC-Element. Somit werden die an sich bekannten selbstregelnden Eigenschaften der PTC-Elemente ausgeschöpft, um die in dem Heizelement verbrauchte elektrische Leistung und die Temperatur des Heizelements zu regeln.

Alternativ können aber auch alle anderen fachüblichen Heizvorrichtungen eingesetzt werden, so kann das mindestens eine Heizelement z.B. einen Widerstandsdraht, einen Rohrheizkörper oder eine Heizpatrone umfassen.

Anhand der in den beiliegenden Zeichnungen dargestellten Ausgestaltungen wird die Erfindung im Folgenden näher erläutert. Ähnliche oder korrespondierende Einzelheiten des erfindungsgemäßen Steckverbinders sind in den Figuren mit denselben Bezugszeichen versehen. Es zeigen:
- **Figur 1**: eine perspektivische Darstellung eines erfindungsgemäßen Steckverbinders;
- **Figur 2**: eine teilweise explodierte perspektivische Darstellung eines Steckverbinders gemäß der vorliegenden Erfindung;
- **Figur 3**: eine perspektivische Schnittdarstellung des erfindungsgemäßen Steckverbinders aus Figur 1;
- **Figur 4**: eine perspektivische Schnittdarstellung des Steckverbinders gemäß einer zweiten Ausführungsform der vorliegenden Erfindung.

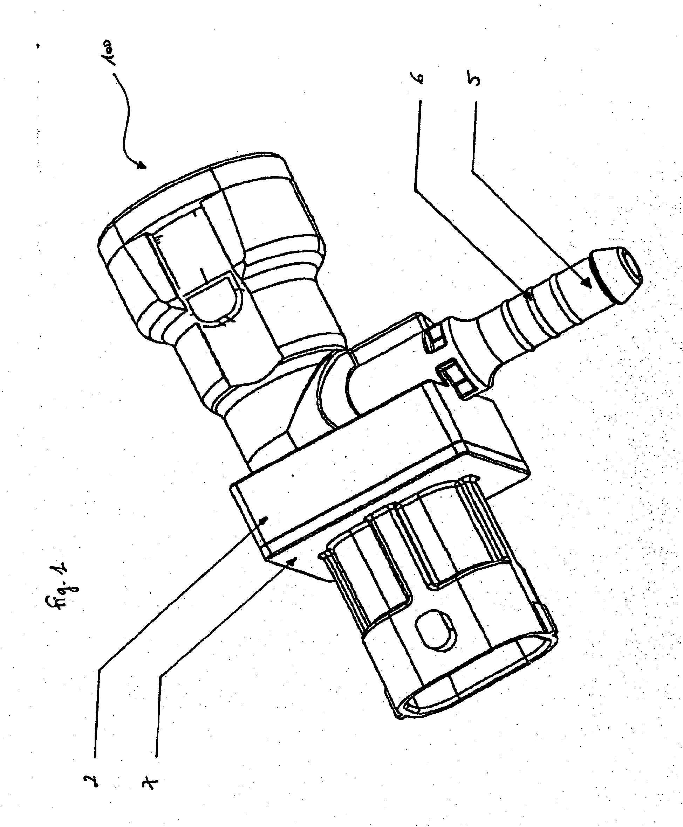

Der erfindungsgemäße Steckverbinder 100 weist, wie aus der Figur 1 ersichtlich, ein Gehäuse 2, das aus elektrisch isolierendem Material, vorzugsweise einem Kunststoff, besteht, und ein Steckergehäuse 7, wobei das Gehäuse 2 und das Steckergehäuse 7 miteinander verbunden sind. Der Steckverbinder 100 kann mit einem Gegensteck-verbinder (nicht dargestellt) verbunden werden, sodass eine erste Fluidleitung an den Steckverbinder 100 angeschlossen werden kann.

Der Steckverbinder 100 weist darüber hinaus ein Fluidanschlusselement 5 auf, an dem eine zweite Fluidleitung angeschlossen werden kann. Das Fluidanschlusselement 5 ist vorzugsweise als ein Rohr oder rohrförmiges Anschlusselement vorgesehen, dessen Längsachse im Wesentlichen senkrecht zu einer Längsachse des Steckverbinders 100 angeordnet ist. Somit wird ein Steckverbinder 100 gebildet, der zwei Fluidleitungen miteinander verbinden kann, wobei ein rechter Winkel zwischen den Längsachsen der jeweiligen Fluidleitungen erreicht werden kann.

Das rohrförmige Fluidanschlusselement 5 weist Vorsprünge 6 auf, die um einen Umfang des rohrförmigen Fluidanschlusselements 5 angeordnet sind. Eine zweite Fluidleitung, die in Form eines Schlauchs vorgesehen ist, kann auf das Fluidanschlusselement 5 aufgesetzt werden, wobei die Vorsprünge 6 es ermöglichen, den Schlauch der zweiten Fluidleitung an dem Fluidanschlusselement 5 festzuhalten.

Die erste Fluidleitung kann in Form eines Schlauchs vorgesehen werden, der an seinem Ende mit einem Gegensteckverbinder 200 (nicht dargestellt) versehen ist, wobei der erfindungsgemäße Steckverbinder 100 und der Gegensteckverbinder 200 einfach lösbar miteinander verbindbar sind. In einem Betriebszustand strömt ein zu erwärmendes Medium, sowohl flüssiges als auch gasförmiges, zwischen der ersten Fluidleitung und der zweiten Fluidleitung.

Der Steckverbinder 100 beinhaltet ein Heizelement (nicht dargestellt), das mit elektrischer Energie versorgt wird und Wärme erzeugt, um das Medium zu erwärmen. Das Heizelement wird über Kontakte, die in dem Steckergehäuse 7 angeordnet sind, mit elektrischer Energie versorgt.

Obwohl der erfindungsgemäße Steckverbinder 100 in den Figuren 1 bis 4 nur mit einem die erste Fluidleitung bildenden Schlauch verbunden dargestellt wird, kann die erste Fluidleitung auch zwei Schläuche umfassen, die jeweils mit einem Gegensteckverbinder versehen sind. Der Steckverbinder 100 ist mit jedem Gegensteckverbinder verbindbar, so dass eine T-Verzweigung gebildet werden kann.

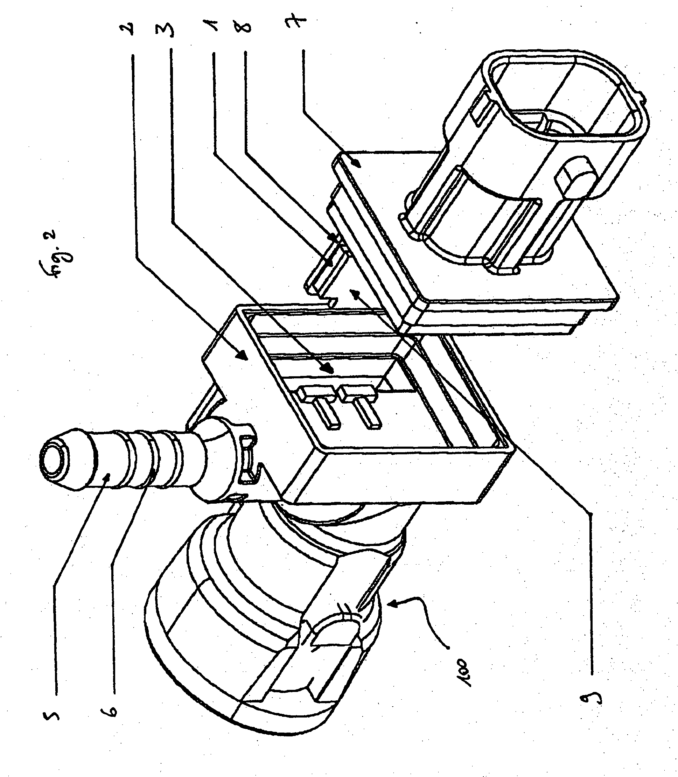

Wie aus der Figur 2 ersichtlich, die eine teilweise explodierte perspektivische Darstellung des erfindungsgemäßen Steckverbinders 100 zeigt, ist das Steckergehäuse 7 in das Gehäuse 2 des Steckverbinders 100 einschiebbar und der Steckverbinder 100 weist ein Heizelement 1, das mit zwei Kontaktelementen 8, 9 elektrisch verbunden ist, auf. Das Heizelement 1 ist beispielsweise als PTC-Heizelement vorgesehen, das in Form einer z.B. rechteckigen dünnen Platte ausgestaltet ist. Obwohl das Heizelement 1 gemäß einer bevorzugten Ausführungsform der vorliegenden Erfindung in Form eines PTC-Heizelements beschrieben wird, kann selbstverständlich das Heizelement 1 beispielsweise in Form eines Widerstandsdrahts, Rohrheizkörpers oder einer Heizpatrone vorgesehen werden. Darüber hinaus können eine Vielzahl von Heizelementen in dem Steckverbinder 100 vorgesehen werden.

Bei der in Figur 2 dargestellten Ausführungsform des erfindungsgemäßen Steckverbinders 100 fließt im Betrieb eine elektrische Energie über die beiden Kontaktelemente 8, 9 durch das PTC-Heizelement 1 hindurch. Die erzeugte Wärmeenergie kann über die beiden Plattenflächen des PTC-Heizelements 1 besonders gut abgegeben werden. Die Kontaktelemente 8, 9 sind daher vorzugsweise als Platten ausgestaltet, deren Außenkontur im Wesentlichen der Außenkontur des Heizelements 1 entspricht. Wie aus der Figur 2 ersichtlich, sind die Kontaktelemente 8, 9 vorzugsweise rechteckig. Andere Ausgestaltungen der Kontaktelemente 8, 9 sind aber auch möglich, vorausgesetzt, dass eine gute Wärmeübertragung zwischen dem mindestens einen Heizelement 1 und den Kontaktelementen 8, 9 erreicht werden kann.

Das zwischen den Kontaktelementen 8, 9 angeordnete Heizelement 1 ist an dem Steckergehäuse 7 angeordnet. Das Heizelement 1 wird in einen Gehäuseteil 3 des Gehäuses 2 des Steckverbinders 100 eingeschoben. Das Gehäuseteil 3 ist vorzugsweise in Form eines Schachts 3 vorgesehen, dessen Abmessungen den Abmessungen der Kontaktelemente 8, 9 entsprechen. Eine Schachtwand trennt das zu erwärmende Medium vom Heizbereich, in dem sich das Heizelement 1 befindet. Der Schacht 3 ist von dem Durchflusskanal 4, in dem das zu erwärmende Medium fließt, abgedichtet. Somit wird eine hermetische Isolation zwischen dem Heizbereich, in dem sich das mindestens eine Heizelement 1 befindet, und dem Durchflusskanal 4, in dem das zu erwärmende Medium strömt, gewährleistet.
Das zwischen den Kontaktelementen 8, 9 angeordnete Heizelement 1 ist in dem Schacht 3 so angeordnet, dass die Wärmeübertragung zwischen dem sich vom Durchflusskanal 4 am nächsten befindenden Kontaktelement 9 und dem zu erwärmenden Medium so groß wie möglich ist. Die Dicke der Schachtwand wird so ausgewählt, dass die Wärmeübertragung zwischen dem Kontaktelement 9 und dem Durchflusskanal 4 so groß wie möglich ist.

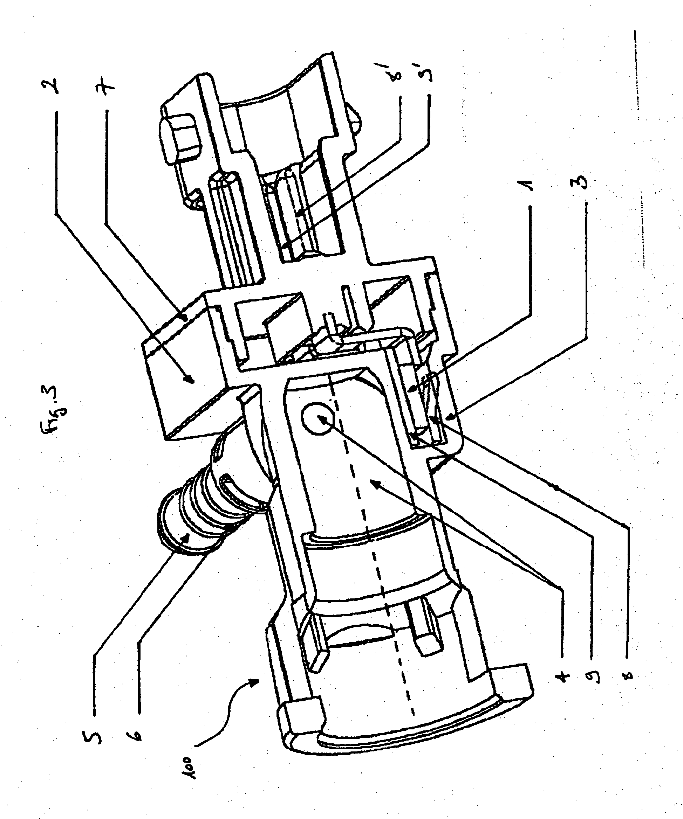

Die Figur 3 zeigt einen Schnitt durch den erfindungsgemäßen Steckverbinder 100 entlang einer Längsachse des Steckverbinders 100. Wie aus dieser Figur ersichtlich, sind an den Kontaktelementen 8, 9 jeweils gekröpfte Steckzungen 8', 9' ausgestaltet. Über die Steckzungen 8', 9' können im Betrieb des erfindungsgemäßen Steckverbinders 100 die elektrische Energie in die Kontaktelemente 8, 9 eingeleitet werden. Die Anordnung der Steckzungen 8', 9' an den Kontaktelementen 8, 9 und ihre Form sind so ausgestaltet, dass ihre Enden in einem zusammengesteckten Zustand des Steckverbinders 100 nebeneinander liegen.

Das Heizelement 1 ist mit den Steckzungen 8', 9' an dem Steckergehäuse 7 angebracht, wobei das Steckergehäuse 7 im Gehäuse 2 des Steckverbinders 100 eingeschoben ist.

Die Steckzungen 8', 9' der Kontaktelemente 8, 9 sind mit einer Energieversorgung (nicht dargestellt) verbindbar. Die Steckzungen 8', 9' erstrecken sich bei dem montierten Steckverbinder 100 in das Steckergehäuse 7 und bilden dadurch die Steckerkontakte des Steckverbinders 100. Obwohl der Stecker in den Figuren 1 bis 4 als ein standardisierter Stecker mit zwei messerförmigen Steckzungen dargestellt wird, sind selbstverständlich andere Ausgestaltungen und eine beliebige Anzahl der Steckzungen 8', 9' ebenfalls möglich.

Wie aus der Figur 3 ersichtlich, ist weiterhin das erste Kontaktelement 8 als Federelement mit herausgebogenen Federzungen ausgebildet. Nachdem das zwischen den Kontaktelementen 8, 9 angeordnete Heizelement 1 in den Schacht 3 eingeführt wurde, erzeugen die Federzungen eine Federkraft, die die Kontaktelemente 8, 9 gegen das Heizelement 1 zusammendrücken. Dadurch wird ein guter Kontakt zwischen dem Heizelement 1 und den Kontaktelementen 8, 9 gewährleistet. Somit wird sowohl der elektrische Fluss als auch die Wärmeübertragung zwischen dem Heizelement 1 und den Kontaktelementen 8, 9 erhöht.

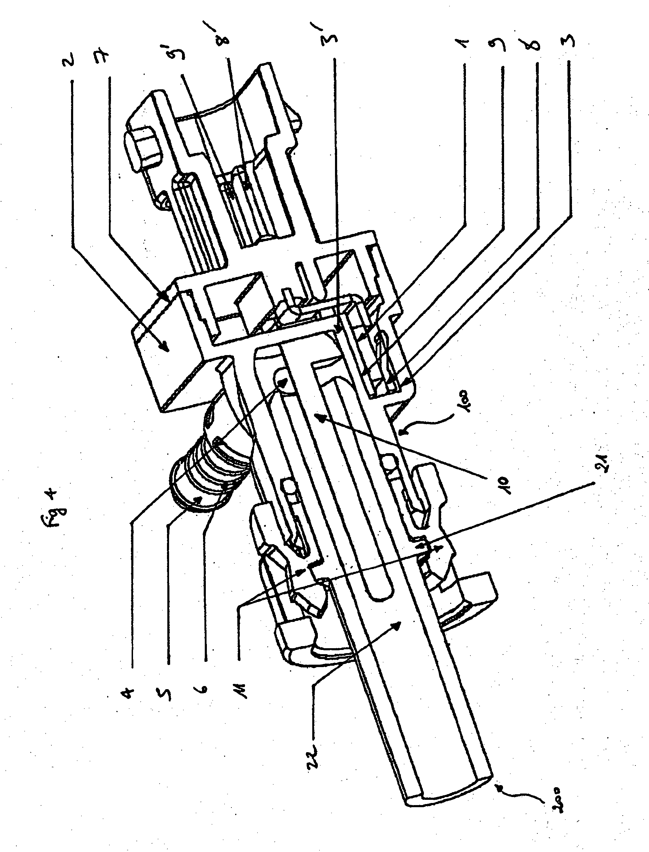

Figur 4 zeigt eine weitere Ausführungsform des erfindungsgemäßen Steckverbinders 100, der hier in einem zusammengesteckten Zustand dargestellt ist, in dem er mit einem ersten Gegensteckverbinder 200 verbunden ist, der am Ende der ersten Fluidleitung angeordnet ist. Der Steckverbinder 100 weist vorzugsweise Rastelemente 11 auf, die mit einer entsprechenden radialen Rastausnehmung 21 des Gegensteckverbinders 200 verrastbar sind. Der Gegensteckverbinder 200 weist darüber hinaus einen lang gestreckten rohrförmigen Kanal 22 auf, in dem das zu erwärmende Medium strömt.

Obwohl der erfindungsgemäße Steckverbinder 100 und der erste Gegensteckverbinder 200 in der Figur 4 als miteinander verrastbar dargestellt sind, sind auch selbstverständlich andere Haltevorrichtungen möglich, wie beispielsweise eine Clipvorrichtung oder eine unlösbare Verpressvorrichtung.

Gemäß einer in Figur 4 dargestellten bevorzugten Ausführungsform der vorliegenden Erfindung weist der Steckverbinder 100 eine Heizlanze 10 auf, die aus einem wärmeleitenden Material, vorzugsweise Kupfer, Aluminium oder Edelstahl, besteht, und lang gestreckt ausgestaltet ist, sodass die Heizlanze 10 in einen Kanal 22 des ersten Gegensteckverbinders 200 einführbar ist. Die Heizlanze 10 kann darüber hinaus aus einem chemikalienbeständigen Material, vorzugsweise Edelstahl, bestehen. Somit ist die Heizlanze 10 gegenüber dem zu erwärmenden Medium, das beispielsweise eine wässrige Hamstofflösung sein kann, beständig.

Die Heizlanze 10 weist Abmessungen auf, die so ausgewählt sind, dass das Ende der Heizlanze 10 in einem zusammengesteckten Zustand sich in dem ersten Gegensteckverbinder 200 befindet. Darüber hinaus ist die Heizlanze 10 vorzugsweise in Form eines rohrförmigen Elements ausgebildet, dessen Durchmesser so angepasst ist, dass das zu erwärmende Medium in dem Kanal 22 des ersten Gegensteckverbinders 200 fließen kann.

Durch die längliche stiftförmige Ausgestaltung der Heizlanze 10 kann die von dem Heizelement 1 erzeugte Wärme in den ersten Gegensteckverbinder 200 geleitet werden. Die Heizlanze 10 ragt aus dem Steckverbinder 100 so heraus, dass die Heizlanze 10 in einem zusammengesteckten Zustand in den ersten Gegensteckverbinder 200 einführbar ist. Dadurch können die von dem Heizelement 1 erzeugte Wärme an den ersten Gegensteckverbinder 200 geleitet und somit potentielle Eisansätze im Bereich des ersten Gegensteckverbinders 200 beseitigt werden.

Die wärmeleitende Heizlanze 10 ist mit dem Heizelement 1 wärmeleitend verbunden, sodass die von dem Heizelement 1 erzeugte Wärme an die Heizlanze 10 übertragen werden kann. Die Dicke der Schachtwand 3' ist so ausgewählt, dass eine optimale Wärmeübertagung zwischen dem vom Durchflusskanal 4 am nächsten angeordneten Kontaktelement 9 und der Heizlanze 10 erreicht wird. Die gekröpfte Ausgestaltung der Steckzungen 8', 9' der Kontaktelemente 8, 9 dient auch dazu, die Wärmeaustauschfläche zwischen der Heizlanze 10 und den Kontaktelementen 8, 9 zu erhöhen, damit die Wärmeübertragung zur Heizlanze 10 so hoch wie möglich ist.

Der Kanal 22 des ersten Gegensteckverbinders 200 weist eine wärmeleitfähige Schicht an seiner Innenseite auf, die vorzugsweise aus einem Metallrohr besteht, das in den Kanal 22 des ersten Gegensteckverbinders 200 eingepresst ist. Dadurch kann die von dem Heizelement 1 erzeugte Wärme besser an den ersten Gegensteckverbinder 200 abgegeben werden. Somit wird die Wärmeübertragung auf den ersten Gegensteckverbinder 200 noch effizienter.

Obwohl das Fluidanschlusselement 5 zum Verbinden der zweiten Fluidleitung mit dem Steckverbinder 100 in den Figuren 1 bis 4 als ein rohrförmiges Element, auf das ein zweiter Schlauch direkt aufgesetzt wird, dargestellt wurde, kann aber auch eine Schnellverbindung zwischen der zweiten Fluidleitung und dem Steckverbinder 100 vorgesehen werden, die ähnlich zur Schnellverbindung zwischen der ersten Fluidleitung und dem Steckverbinder 100 ist. Die zweite Fluidleitung umfasst dabei einen zweiten Schlauch, der mit einem zweiten Gegensteckverbinder versehen ist, wobei der Steckverbinder 100 mit dem zweiten Gegensteckverbinder verbindbar ist.

## Patentansprüche

1. Steckverbinder zum Verbinden einer ersten Fluidleitung mit einer zweiten Fluidleitung im Zusammenwirken mit mindestens einem Gegensteckverbinder (200), wobei ein zu erwärmendes Medium zwischen der ersten Fluidleitung und der zweiten Fluidleitung durch den Steckverbinder (100) strömt, und der Steckverbinder (100) mindestens ein Heizelement (1) zum Beheizen des zu erwärmenden Mediums umfasst, weiterhin umfassend ein Gehäuse (2) aus elektrisch isolierendem Material, vorzugsweise einem Kunststoff, wobei das mindestens eine Heizelement (1) in einem Gehäuseteil (3) des Steckverbinders (100) eingeschlossen ist, der gegenüber dem zu erwärmenden Medium abgedichtet ist.

2. Steckverbinder nach Anspruch 1, wobei der Gehäuseteil (3) einen im Gehäuse (2) ausgestalteten Schacht (3) umfasst, und das mindestens eine Heizelement (1) in dem Schacht (3) eingeschoben ist.

3. Steckverbinder nach einem der Ansprüche 1 bis 2, weiterhin umfassend einen Durchflusskanal (4), durch den das zu erwärmende Medium strömt, wobei das mindestens eine Heizelement (1) gegenüber dem Durchflusskanal (4) abgedichtet ist.

4. Steckverbinder nach einem der Ansprüche 1 bis 3, weiterhin umfassend ein Fluidanschlusselement (5) zum Verbinden der zweiten Fluidleitung mit dem Steckverbinder (100).

5. Steckverbinder nach Anspruch 4, wobei die zweite Fluidleitung einen zweiten Schlauch umfasst, und das Fluidanschlusselement (5) rohrförmig ausgebildet ist, so dass der zweite Schlauch auf das Fluidanschlusselement (5) aufsetzbar ist.

6. Steckverbinder nach Anspruch 5, wobei das Fluidanschlusselement (5) mit Vorsprüngen (6) zum Festhalten des aufgesetzten zweiten Schlauchs versehen ist.

7. Steckverbinder nach einem der Ansprüche 1 bis 6, wobei der Steckverbinder (100) so ausgebildet ist, dass die erste Fluidleitung und die zweite Fluidleitung mit einem Winkel zwischen 30° und 180°, vorzugsweise 90°, zu einander angeordnet sind.

8. Steckverbinder nach einem der Ansprüche 1 bis 7, weiterhin umfassend zwei Kontaktelemente (8, 9), die mit dem mindestens einen Heizelement (1) elektrisch verbunden sind, wobei die zwei Kontaktelemente (8, 9) mit einer elektrischen Leistungsversorgung verbindbar sind.

9. Steckverbinder nach Anspruch 8, wobei das mindestens eine Heizelement (1) zwischen den zwei Kontaktelementen (8, 9) angeordnet ist.

10. Steckverbinder nach einem der Ansprüche 8 oder 9 weiterhin umfassend ein Steckergehäuse (7), wobei die zwei Kontaktelemente (8, 9) je eine Steckzunge (8', 9') aufweisen, und die zwei Steckzungen (8', 9') in dem Steckergehäuse (7) angeordnet sind.

11. Steckverbinder nach einem der Ansprüche 1 bis 10, wobei das mindestens eine Heizelement (1) ein PTC-Element umfasst.

12. Steckverbinder nach einem der Ansprüche 1 bis 10, wobei das mindestens eine Heizelement (1) einen Widerstandsdraht umfasst.

13. Steckverbinder nach einem der Ansprüche 1 bis 10, wobei das mindestens eine Heizelement (1) einen Rohrheizkörper umfasst.

14. Steckverbinder nach einem der Ansprüche 1 bis 10, wobei das mindestens eine Heizelement (1) eine Heizpatrone umfasst.

15. Steckverbinder nach einem der Ansprüche 1 bis 14, weiterhin umfassend eine Heizlanze (10), die aus einem wärmeleitenden Material, vorzugsweise Kupfer, Aluminium oder Edelstahl, besteht und mit den mindestens einen Heizelement (1) wärmeleitend verbunden ist.

16. Steckverbinder nach Anspruch 15, wobei die Heizlanze (10) lang gestreckt ausgebildet ist und aus dem Steckverbinder (100) herausragt, so dass die Heizlanze (10) in einem zusammengesteckten Zustand in den mindestens einen Gegensteckverbinder (200) einführbar ist.

17. Steckverbinder nach einem der Ansprüche 15 oder 16, wobei die Heizlanze (10) aus einem chemikalienbeständigen Material besteht, vorzugsweise Edelstahl.

18. Steckverbinder nach einem der Ansprüche 1 bis 17, wobei der Steckverbinder (100) angepasst ist, ein flüssiges oder gasförmiges Medium zu erwärmen.

19. Steckverbinderanordnung umfassend einen Steckverbinder (100) nach einem der Ansprüche 1 bis 18 und mindestens einem ersten Gegensteckverbinder (200), wobei die erste Fluidleitung einen ersten Schlauch umfasst, der mit dem mindestens einen ersten Gegensteckverbinder (200) versehen ist, und der Steckverbinder (100) mit dem mindestens einen ersten Gegensteckverbinder (200) verbindbar ist.

20. Steckverbinderanordnung nach Anspruch 19, wobei die erste Fluidleitung zwei Schläuche umfasst, die jeweils mit einem ersten Gegensteckverbinder versehen sind, und der Steckverbinder (100) mit jedem ersten Gegensteckverbinder verbindbar ist.

21. Steckverbinderanordnung nach einem der Ansprüche 19 oder 20, wobei die zweite Fluidleitung einen zweiten Schlauch umfasst, der mit einem zweiten Gegensteckverbinder verstehen ist, und der Steckverbinder (100) mit dem zweiten Gegensteckverbinder verbindbar ist.

22. Steckverbinderanordnung nach einem der Ansprüche 19 bis 21, wobei der erste Gegensteckverbinder (200) einen Kanal (22) aufweist, dessen Innenseite mit einer wärmeleitfähigen Schicht verstehen ist.

23. Steckverbinderanordnung nach Anspruch 22, wobei die wärmeleitfähige Schicht ein Metallrohr umfasst, das in den Kanal (22) eingepresst oder eingespritzt ist.

## Claims

1. A plug connector for connecting a first fluid line to a second fluid line interacting with at least one mating connector (200), a medium to be heated flowing between the first fluid line and the second fluid line through the plug connector (100), the plug connector (100) comprising at least one heating element (1) for heating the medium to be heated, the plug connector further comprising a housing (2) made of electrically insulating material, preferably a plastic, wherein the at least one heating element (1) is enclosed in a housing part (3) of the plug connector (100) which is sealed off from the medium to be heated.

2. The plug connector according to Claim 1, the housing part (3) comprising-a shaft (3) formed in the housing (2), and the at least one heating element (1) being inserted into the shaft (3).

3. The plug connector according to either of Claims 1 or 2, further comprising a flow-through channel (4) through which the medium to be heated flows, the at least one heating element (1) being sealed off from the flow-through channel (4).

4. The plug connector according to any of Claims 1 to 3, further comprising a fluid connection element (5) for connecting the second fluid line to the plug connector (100).

5. The plug connector according to Claim 4, the second fluid line comprising a second tube, and the fluid connection element (5) being tubular in form so that the second tube can be placed on the fluid connection element (5).

6. The plug connector according to Claim 5, the fluid connection element (5) being provided with projections (6) for securing the second attached tube.

7. The plug connector according to any of Claims 1 to 6, the plug connector (100) being designed such that the first fluid line and the second fluid line are disposed at an angle of between 30° and 180°, preferably 90°, in relation to one another.

8. The plug connector according to any of Claims 1 to 7, further comprising two contact elements (8, 9) which are connected electrically to the at least one heating element (1 ), the two contact elements (8, 9) being connectable to an electric power supply.

9. The plug connector according to Claim 8, the at least one heating element (1) being disposed between the two contact elements (8, 9).

10. The plug connector according to either of Claims 8 or 9, further comprising a plug housing (7), the two contact elements (8, 9) each having an insertion tongue (8', 9'), and the two insertion tongues (8', 9') being disposed in the plug housing (7).

11. The plug connector according to any of Claims 1 to 10, the at least one heating element (1) comprising a PTC element.

12. The plug connector according to any of Claims 1 to 10, the at least one heating element (1) comprising a resistance wire.

13. The plug connector according to any of Claims 1 to 10, the at least one heating element (1) comprising a tubular heating element.

14. The plug connector according to any of Claims 1 to 10, the at least one heating element (1) comprising a heating cartridge.

15. The plug connector according to any of Claims 1 to 14, further comprising a heating lance (10) made of a heat-conductive material, preferably copper, aluminium or stainless steel, and to which at least one heating element (1) is connected heat-conductively.

16. The plug connector according to Claim 15, the heating lance (10) being elongated in form and projecting out of the plug connector (100) so that in the plugged in state the heating lance (10) can be introduced into the at least one mating connector (200).

17. The plug connector according to any of Claims 15 or 16, the heating lance (10) being made of a chemically resistant material, preferably stainless steel.

18. The plug connector according to any of Claims 1 to 17, the plug connector (100) being adapted to heat a liquid or gaseous medium.

19. A plug connector arrangement comprising a plug connector (100) according to any of Claims 1 to 18 and at least one first mating connector (200), the first fluid line comprising a first hose which is provided with the at least one first mating plug connector (200), and the plug connector (100) being connectable to the at least one first mating connector (200).

20. The plug connector arrangement according to Claim 19, the first fluid line comprising two tubes which are respectively provided with a first mating connector, and the plug connector (100) being connectable to each first mating connector.

21. The plug connector arrangement according to either of Claims 19 or 20, the second fluid line comprising a second tube which is provided with a second mating connector, and the plug connector (100) being connectable to the second mating connector.

22. The plug connector arrangement according to any of Claims 19 to 21, the first mating connector (200) having a channel (22) the inside of which is provided with a heat conductive layer.

23. The plug connector arrangement according to Claim 22, the heat conductive layer comprising a metal tube which is pressed or injected into the channel (22).

## Revendications

1. Connecteur pour raccorder une première conduite de fluide à une deuxième conduite de fluide en coopération avec au moins un connecteur homologue (200), dans lequel un milieu à chauffer s'écoule entre la première conduite de fluide et la deuxième conduite de fluide à travers le connecteur (100), le connecteur (100) comprenant au moins un élément chauffant (1) pour chauffer le milieu à chauffer, le connecteur comprenant en outre un boîtier (2) en matériau électriquement isolant, de préférence une matière plastique, dans lequel le au moins un élément chauffant (1) est enfermé dans une partie du boîtier (3) du connecteur (100) qui est rendue étanche par rapport au milieu à chauffer.

2. Connecteur selon la revendication 1, dans lequel la partie de boîtier (3) comprend un puits (3) formé dans la partie de boîtier (2), et le au moins un élément chauffant (1) est inséré dans le puits (3).

3. Connecteur selon l'une quelconque des revendications 1 ou 2, comprenant en outre un canal d'écoulement (4) à travers lequel s'écoule le milieu à chauffer, ledit au moins un élément chauffant (1) étant rendu étanche par rapport au canal d'écoulement (4).

4. Connecteur selon l'une quelconque des revendications 1 à 3, comprenant en outre un élément de raccordement de fluide (5) pour raccorder la deuxième conduite de fluide au connecteur (100).

5. Connecteur selon la revendication 4, dans lequel la deuxième conduite de fluide comprend un deuxième tuyau, et l'élément de raccordement de fluide (5) est constitué de façon tubulaire de sorte que le deuxième tuyau peut être mis en place sur l'élément de raccordement de fluide (5).

6. Connecteur selon la revendication 5, l'élément de raccordement de fluide (5) étant muni de saillies (6) pour retenir le deuxième tuyau mis en place.

7. Connecteur selon une quelconque des revendications 1 à 6, le connecteur (100) étant constitué de sorte que la première conduite de fluide et la deuxième conduite de fluide sont disposées avec un angle compris entre 30° et 180°, de préférence avec un angle de 90°, l'une par rapport à l'autre.

8. Connecteur selon une quelconque des revendications 1 à 7, comprenant en outre deux éléments de contact (8, 9) qui sont électriquement raccordés à ledit au moins un élément chauffant (1), les deux éléments de contact (8, 9) pouvant être raccordés à une alimentation électrique.

9. Connecteur selon la revendication 8, ledit au moins un élément chauffant (1) étant disposé entre les deux éléments de contact (8, 9).

10. Connecteur selon une quelconque des revendications 8 ou 9, comprenant également un boîtier de connexion (7), les deux éléments de contact (8, 9) présentant chacun une languette à fiche (8', 9'), et les deux languettes à fiche (8', 9') étant disposées dans le boîtier de connexion (7).

11. Connecteur selon une quelconque des revendications 1 à 10, ledit au moins un élément chauffant (1) comprenant un élément PTC.

12. Connecteur selon une quelconque des revendications 1 à 10, ledit au moins un élément chauffant (1) comprenant un fil de résistance.

13. Connecteur selon une quelconque des revendications 1 à 10, ledit au moins un élément chauffant (1) comprenant un corps chauffant tubulaire.

14. Connecteur selon une quelconque des revendications 1 à 10, ledit au moins un élément chauffant (1) comprenant une cartouche chauffante.

15. Connecteur selon une quelconque des revendications 1 à 14, comprenant en outre une lance chauffante (10) qui se compose d'un matériau conducteur de la chaleur, de préférence en cuivre, en aluminium ou en acier inoxydable et à laquelle au moins un élément chauffant (1) est raccordé de façon à conduire la chaleur.

16. Connecteur selon la revendication 15, la lance chauffante (10) étant formée allongée et dépassant du connecteur (100), de sorte qu'à l'état enfiché, la lance chauffante (10) peut être introduite dans le au moins un connecteur homologue (200).

17. Connecteur selon une quelconque des revendications 15 ou 16, la lance chauffante (10) se composant d'un matériau résistant aux produits chimiques, de préférence de l'acier inoxydable.

18. Connecteur selon une quelconque des revendications 1 à 17, le connecteur (100) étant adapté pour échauffer un milieu liquide ou gazeux.

19. Dispositif de connecteur, comprenant un connecteur (100) selon une quelconque des revendications 1 à 18 et au moins un premier connecteur homologue (200), la première conduite de fluide comprenant un premier tuyau qui est muni dudit au moins un premier connecteur homologue (200), et le connecteur (100) pouvant être raccordé audit au moins un premier connecteur homologue (200).

20. Dispositif de connecteur selon la revendication 19, la première conduite de fluide comprenant deux tuyaux qui sont respectivement munis d'un premier connecteur homologue, et le connecteur (100) pouvant être raccordé à chaque premier connecteur homologue.

21. Dispositif de connecteur selon une quelconque des revendications 19 ou 20, la deuxième conduite de fluide comprenant un deuxième tuyau qui est muni d'un deuxième connecteur homologue, et le connecteur (100) pouvant être raccordé au deuxième connecteur homologue.

22. Dispositif de connecteur selon une quelconque des revendications 19 à 21, le premier connecteur homologue (200) ayant un canal (22) dont l'intérieur est pourvu d'une couche conductrice de chaleur.

23. Dispositif de connecteur selon la revendication 22, la couche conductrice de chaleur comprenant un tube métallique qui est pressé ou injecté dans le canal (22).
